# EUROPEAN PATENT APPLICATION

(11) **EP 0 566 152 A1**
(43) Date of publication of application: **20.10.1993**
(21) Application number: 93106260.8
(22) Date of filing: 16.04.1993
(51) Int. Cl.: F16B 15/04

(54) **Nail**

(30) Priority: 16.04.1992 JP 96393/92; 25.06.1992 JP 167432/92; 17.12.1992 JP 337018/92
(71) Applicant: KOKUBU KAGAKU KOGYO CO., LTD., Kashiwara City, Osaka (JP)
(72) Inventor: Oba, Noboru, c/o Kokubu Kagaku Kogyo Co., Ltd., Kashiwara City, Osaka (JP)
(74) Representative: Thiel, Christian, Dr. Dipl.-Chem.

(57) **Abstract**

There is provided a nail which achieves large resistances against pulling even from an object of small retaining force such as plasterboard or the like. One end of a rod part (3) of the nail is fixed to a flange (2), and the other end (3c) of the rod part (3) is movably passed through a through-hole of the flange (2) to project a predetermined distance from the flange (2). When the flange (2) butts against an object and the one end (3a) of the rod part (3) stops entering the object, the other end (3c) is pushed through the flange (2), whereby a front end of the rod part (3) expands in the lateral direction. Accordingly, large pulling resistances can be gained.

## Description

### BACKGROUND OF THE INVENTION

### 1. Field of the Invention

The present invention relates to a nail for plasterboard, cement or ALC panels (autoclaved light concrete plates) etc. of small retaining force.

### 2. Description of the Prior Art

It has conventionally been impossible to use a nail for material of small retaining force, for instance, plasterboard, and therefore a bracket or the like has been employed along with an adhesive, etc.

However, the adhesive agent may be deteriorated with time, accordingly lacking reliability.

### SUMMARY OF THE INVENTION

The object of the present invention is therefore to provide a nail which can positively be fixed in such material with small retaining force as plasterboard, cement or ALC panels.

In order to achieve the aforementioned object, a nail of the present invention is provided with a flange and a rod part. One end of the rod part is fixed to the flange and the other end thereof penetrates the flange in a movable fashion and projects a predetermined distance in the opposite direction to a U-bent central part of the rod part continued to the one end.

The front end of the U-bent part of the rod part is desirably sharpened.

An engaging part is provided at the other end of the rod part to be engaged with the flange.

The one end and the other end of the rod part are rigid, whereas the central part is rendered flexible.

Both the one end and the other end of the rod part are processed through work hardening treatment.

The front end of the U-bent rod part comprises an edge in the shape of an edge of a chisel.

The chisel-edge-shaped edge of the U-bent part is rounded off at both sides thereof.

In another aspect of the present invention, a nail is provided with a rod part and an engaging part. The rod part has a central part bent in U shape, with an annular part formed at one end thereof through which the other end of the rod part is inserted. The engaging part is fixed to the other end of the rod part and engageable to the annular part.

A notch is formed a predetermined distance from the front end of the U-bent rod part at the outer side thereof.

A film of flexible and elastic material is coated at least partly around the rod part of the U-bent central part side with respect to the flange part in a movable fashion relative to the rod part.

In a different arrangement, a film of flexible and elastic material is coated at least partly around the rod part of the U-bent central part side with respect to the annular part in a movable fashion relative to the rod part.

A washer is provided at both parallel portions of the U-bent central part of the rod part in a movable fashion towards the flange.

In the case, for example, where a roofing material is to be fixed to a plasterboard, the nail of the present invention is held straight on the roofing material and the other end of the rod part of the nail is struck by a hammer. The U-shaped central part of the rod part penetrates the roofing material to be sent into the depth of the plasterboard. When the flange of the nail butts against the roofing material, the one end of the rod part is stopped and not driven further into the plasterboard because the one end of the rod part is secured to the flange. Meanwhile, the other end of the rod part which is movable to the flange passes through the flange into the plasterboard. Accordingly, the central part of the rod part is expanded in O shape or L shape, whereby the nail is completely fixed while the other end of the rod part is perfectly driven inside the flange.

As described hereinabove, since the front end of the double-folded rod part driven into the plasterboard expands in O or L shape, the nail gains strong retaining force, namely, strong resistances to pulling even from an object of small retaining force.

If the front end of the rod part bent in U shape is sharp, the nail is easily driven into wood or ALC panels, etc. without much resistance, while securing strong retaining force.

Moreover, as an engaging part fixed to the flange is provided at the other end of the rod part, even if the nail set into the plasterboard or ALC panel is pulled out to come off, the central part of the rod part expanded in O or L shape is hard to deform because the flange is engaged with the engaging part, thereby achieving strong retaining force. Without the engaging part, when one end of the rod part falls off from the plasterboard or the like together with the flange, the other end of the rod part which is not engaged with the flange is left in the plasterboard. As a result, the shape of the central part of the rod part expanded in the lateral direction into O, L or the like shape is collapsed, thus losing the width in the lateral direction and eventually losing the retaining force.

If the one end and the other end of the rod part are rigid parts while the U-bent central part is a flexible part, the nail can be forwarded into the plasterboard or ALC panel positively without the one and the other ends of the rod part being deflected. Particularly, the other end of the rod part which projects from the flange is never deflected at the time of driving it. Moreover, since the central part of the rod part is of flexible part, the nail expands easily in the lateral direction, thereby achieving large retaining force.

In the case where the one end and the other end of the rod part are rigid through work hardening, the rigid ends can be formed with ease and at low cost.

If the rigid parts are formed by hardening, they become considerably hard and strong.

If the front end of the U-bent rod part is like an edge of a chisel, when the nail is driven into the woodgrain wood in a manner that the edge is orthogonal to the direction of fibers of the wood, the nail is sent forward while cutting the fibers, thus making it possible to smoothly drive the nail without breaking the wood.

If both sides of the edge of the nail are rounded off, the nail can be smoothly pushed into the wood having fibers without breaking the wood.

When an annular part is formed in place of the flange at one end of the rod part, the annular part of the rod part is able to function as a flange, and can be manufactured easily and inexpensively.

If a notch is provided a predetermined distance from the front end at the outer side of the U-bent central part, the central part is suddenly bent at the notch, with securing large resistances to pulling. In the other point of view, the stress is concentrated at the notch which accordingly becomes a bending origin. Therefore, the central part of the nail is promptly and uniformly bent at the notch irrespective of the force and direction when the nail is struck by a hammer, and the uniform and large retaining force is obtained. That is, it is possible to obtain constant pulling resistance at all times.

If a film of flexible and elastic material which is movable to the rod part is coated at least partly around the rod part of the U-bent central part side with respect to the flange, it is prevented that rain drops invade the bore formed by the nail. In other words, when the nail is driven into the ALC panel with a roofing material held therebetween, the film coated around the nail is rolled up along the rod part and finally positioned between the end face of the roofing material and the flange, and completely surrounds the periphery of the rod part. When the flange is pressed against the roofing material as the nail is further pushed forward into the ALC panel, the flexible and elastic film tightly seals the upper end of the bore around the rod part between the roofing material and the flange, thus acting as a packing. Therefore, the nail coated with the film can prevent the invasion of water into the bored hole, particularly, the bore expanded thereinside.

Further, if a film of flexible and elastic material which is movable to the rod part is coated at least partly around the rod part of the U-bent central part side with respect to the annular part, it can be prevented that the rain water enters the bored hole. For example, when the nail is driven into the ALC panel while a roofing material is held between the annular part of the nail and the ALC panel, the coating film is rolled up along the rod part to be finally located between the end face of the roofing material, and the engaging part, with perfectly surrounding the rod part. When the nail is further sent into the ALC panel to press the engaging part against the roofing material via the annular part, the rolled-up film of flexible and elastic material works as a packing thereby to seal the upper end of the bore around the rod part. Therefore, the nail with the film can perfectly prevent the water from entering the bore, especially, from entering the bore expanded thereinside.

When a washer is fitted in a movable fashion towards the flange to hold both parallel sides of the U-bent central part of the rod part, although one of the two sides starts to buckle away from the other side when the nail is driven into a hard material, the washer holds the two sides and prevents the buckle. When the washer hits the end face of the hard material, the washer is pressed by the end face and moved to the flange. In the state when the nail is completely sent inside, the washer is held in tight contact with the flange and the end face of the hard material.

### BRIEF DESCRIPTION OF THE DRAWINGS

These and other objects and features of the present invention will become clear from the following description taken in conjunction with the preferred embodiments thereof with reference to the accompanying drawings throughout which like parts are designated by like reference numerals, and in which:
Fig. 1 is a perspective view of a nail according to a first embodiment of the present invention;
Fig. 2 is a diagram showing a using state of the nail of Fig. 1;
Figs. 3(A), 3(B) and 3(C) are diagrams explaining a manufacturing method of the nail of Fig. 1;
Figs. 4(A) and 4(B) are a perspective view and a plan view of a nail according to a second embodiment of the present invention;
Fig. 5 is a perspective view of a nail according to a third embodiment of the present invention;
Figs. 6(A), 6(B) and 6(C) are comparative views of nails according to a fourth and a fifth embodiments of the present invention;
Figs. 7(A), 7(B), 7(C), 7(D) and 7(E) are front views of examples of engaging parts;
Figs. 8(A) and 8(B) are diagrams showing a forming method of the engaging part;
Fig. 9 is a diagram indicative of the potential inconvenience of the present invention;
Figs. 10(A), 10(B), 10(C) and 10(D) are diagrams of the nail according to the fifth embodiment of the present invention, specifically, Fig. 10(A) showing a state before a rod part is bent in U shape, Fig. 10(B) showing a state when the nail is driven halfway into the ALC panel, Fig.10(C) showing a state when the nail is completely driven into the ALC panel, and Fig. 10(D) being a plan view of the nail;
Fig. 11(A) shows a manufacturing method of the nail of the fifth embodiment;
Fig. 11(B) shows a side view of a moving die used for manufacturing the nail of the fifth embodiment;
Figs. 12(A) and 12(B) are a front view and a side view of a front end part of a nail according to a sixth embodiment of the present invention;
Fig. 13 is a diagram of a bore formed when the nail of the sixth embodiment is driven into a woodgrain panel;
Figs. 14(A) and 14(B) are a front view and a side view of a front end part of a nail according to a seventh embodiment of the present invention;
Figs. 15(A), 15(B), 15(C) and 15(D) are diagrams of a nail according to an eighth embodiment of the present invention, wherein Fig. 15(A) shows a state before its rod part is bent into U shape, Fig. 15(B) is a perspective view of the nail and Figs. 15(C) and 15(D) are perspective views of a modification of the nail seen from different directions;
Figs. 16(A), 16(B), 16(C), 16(D) and 16(E) are diagrams explaining the operation of a nail according to a ninth embodiment of the present invention;
Figs. 17(A), 17(B), 17(C) and 17(D) show the deformations of the nail of the ninth embodiment depending on the depth and position of a notch and the length of a projection of a rod part from a flange;
Figs. 18(A), 18(B), 18(C) and 18(D) are explanatory views of the operation of a nail according to a 10th embodiment of the present invention;
Figs. 19(A), 19(B), 19(C) and 19(D) show the deformations of the nail of the 10th embodiment depending on the depth and position of a notch and the length of a projection of a rod part from a flange;
Fig. 20 is a front view of a nail according to an 11th embodiment of the present invention;
Fig. 21 is explanatory of the operation of the nail of Fig. 20;
Fig. 22 is a diagram of a modification of the nail of the fifth embodiment;
Figs. 23(A), 23(B), 23(C), 23(D) and 23(E) are explanatory views of a nail according to a 12th embodiment of the present invention;
Figs. 24(A) and 24(B) are illustrative views of the state when the water invades a bore in the first embodiment and an improved design of the nail;
Fig. 25 is a front view of a nail according to a 13th embodiment of the present invention; and
Figs. 26(A) and 26(B) illustrate how the nail of the first embodiment buckles.

### DETAILED DESCRIPTION OF THE PREFERRED EMBODIMENTS

The present invention will be depicted in detail taken in conjunction with preferred embodiments thereof with reference to the accompanying drawings.

### [First embodiment]

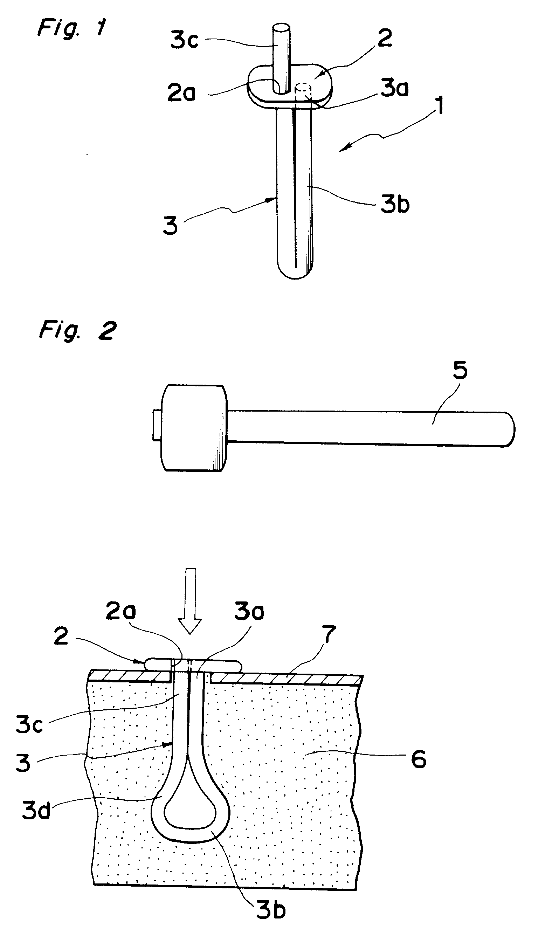

As shown in Fig. 1, a nail 1 according to a first embodiment of the present invention is formed of metal such as iron, stainless steel, etc. and consists of a round or oval flange 2 and a rod part 3. One end 3a of the rod part 3 is fixed to the flange 2, the central part 3b is bent in U shape and the other end 3c projects a predetermined length out through a through-hole 2a of the flange 2.

Referring now to Fig. 2, an example when the nail 1 is used to fix a roofing material 7 to an ALC panel 6 of small retaining force will be depicted below.

In the first place, the nail 1 is held straight on the roofing material 7 and the other end 3c of the rod part 3 is hit by a hammer 5. The central part 3b of the rod part 3 (referring to Fig. 1) is sent into the ALC panel 6. When the flange 2 butts against the roofing material 7, the one end 3a of the rod part 3 becomes impossible to proceed further into the ALC panel 6 because the one end 3a is fixed to the flange 2.

As the other end 3c of the rod part 3 is hit more by the hammer 5, since the other end 3c is rendered movable to the through-hole 2a of the flange 2, it is relatively moved to the flange 2 and forwarded into the ALC panel 6. In consequence, the other end 3c is driven into the ALC panel 6 while the one end 3a of the rod part is secured to the flange 2. Accordingly, the central part 3b of the rod part 3 generates a curved section 3d which expands, for example, in O or L shape. The nail is perfectly settled in the state where the other end 3c of the rod part 3 is set completely inside the flange 2.

Since the curved section 3d expanding in the lateral direction is formed at the time when the drive of the nail 1 is finished, even the ALC panel 6 of small retaining force can assume large resistances to pulling, i.e., large fixing force.

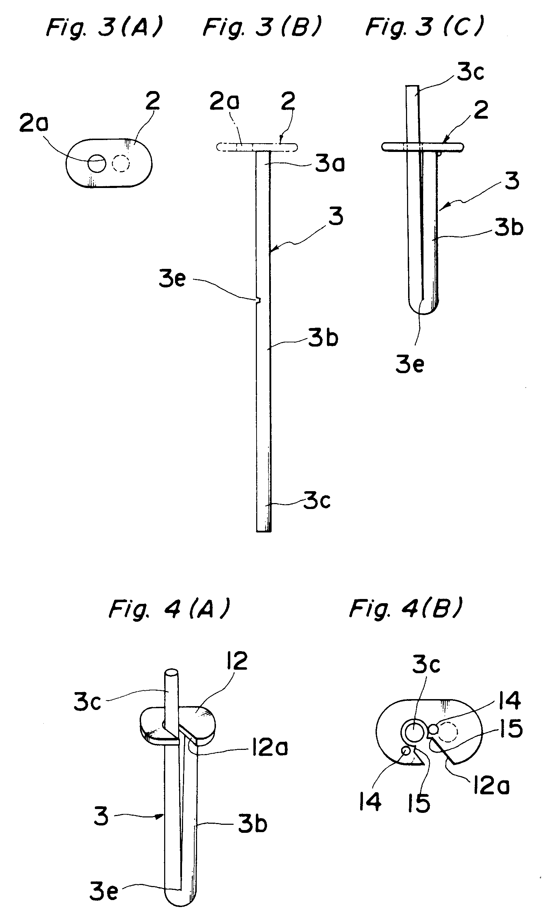

Figs. 3(A)-3(C) indicate the manufacturing method of the above nail 1. Fig. 3(A) shows the flange 2 and Fig. 3(B) shows the rod part 3 fixed to the flange 2. The rod part 3 has a recessed portion 3e formed where it is to be bent, thereby making it easy to bend the rod part 3 in U shape. As indicated in Fig. 3(C), the rod part 3 bent in U shape is inserted into the hole 2a of the flange 2, with one end 3a of the rod part 3 fixed to the flange 2.

### [Second embodiment]

Figs. 4(A) and 4(B) illustrate a nail according to a second embodiment of the present invention. Although the round through-hole 2a is formed in the flange 2 of the nail 1 in Fig. 1, a notch is provided in the slantwise direction in a flange 12 in the second embodiment. The other end 3c of the rod part 3 is movably inserted into this notch 12a in the second embodiment. After the other end 3c is movably inserted into the notch 12a, the flange 2 is pressed at points 14, 14 by a punching press thereby to form bulging portions 15, 15. Accordingly, the other end 3c of the rod part is prevented from coming outside the notch 12a. Owing to this arrangement, the other end 3c of the rod part 3 can be inserted into the notch 12a with improved workability than when the other end 3c is inserted into the round through-hole 2a as in the first embodiment shown in Fig. 1.

### [Third embodiment]

In the case where a roof tile and an ALC panel are to be tied by the nail of the first or second embodiment, the front end of the nail folded at the central part of the rod part is enough to be simple U-shape because bores are formed in the roof tile beforehand. However, the front end of the nail should be formed sharp when the nail is to be driven into wood or the like material smoothly.

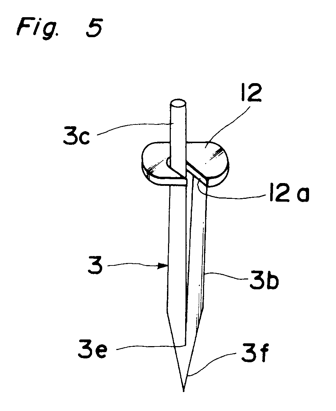

Fig. 5 illustrates a nail applicable to such circumstances as mentioned above. In the nail of Fig. 5 according to a third embodiment, a U-bent point 3f of the rod part 3 of the nail of the second embodiment of Figs. 4(A) and 4(B) is sharpened like a spearhead. Therefore, the nail can be smoothly driven into the wood or ALC panel, etc., with achieving strong retaining force.

### [Fourth embodiment]

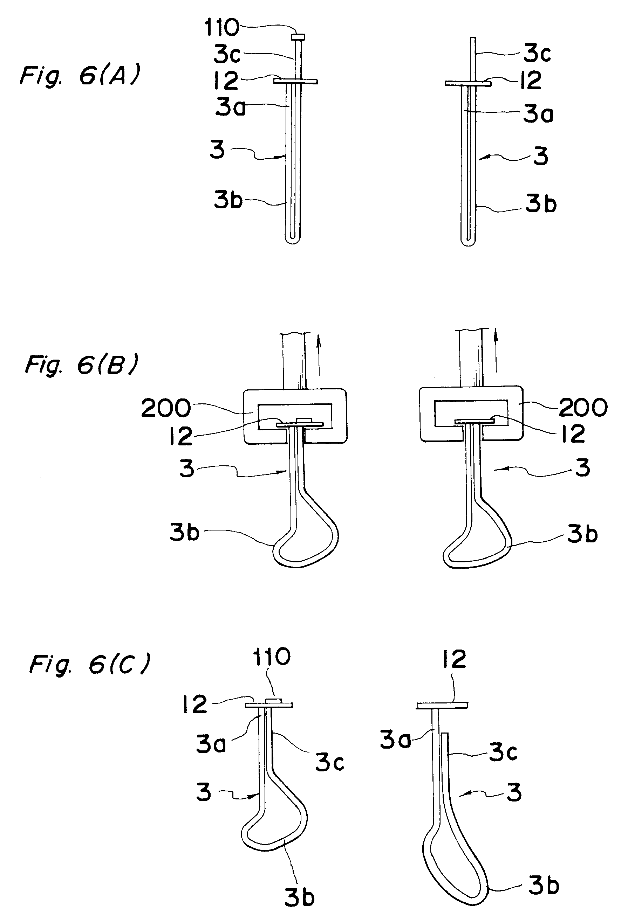

A nail of a fourth embodiment is shown in Figs. 6(A), 6(B) and 6(C) at the left side. For comparison, the nail of the second embodiment is indicated at the right side in Figs. 6(A)-6(C).

As is made clear from Figs. 6(A)-6(C), the nail of the fourth embodiment is different from the second embodiment only in the fact that an engaging part 110 is provided at the other end 3c of the rod part 3 to be engaged to the flange 12. The same parts as in the second embodiment are denoted by the same reference numerals and the description thereof will be abbreviated here.

When this nail is hit into the ALC panel, the central part 3b expands into O or L shape as shown in Fig. 6(B) at the left side, similar to Fig. 6(B) at the right side of the second embodiment.

However, if the flange 12 is pulled in an arrow direction by a pulling resistance testing device 200 at the left side in Fig. 6(B), the flange 12 is engaged to the engaging part 110 as in Fig. 6(C) at the left. The rod part is pulled while the one end 3a and the other end 3c of the rod part are tied up in a bundle and therefore, the central part 3b bent in O or L shape is hard to deform, and large pull-out resistances can be achieved. On the other hand, in the nail of the second embodiment shown in Fig. 6(C) at the right side, the other end 3c of the rod part 3 is left in the ALC panel due to the absence of an engaging part, causing both the one end 3a of the rod part and the flange 12 to be pulled out and reducing the expanse of the central part 3b in the lateral direction. The nail of the second embodiment is difficult to withstand large pulling force.

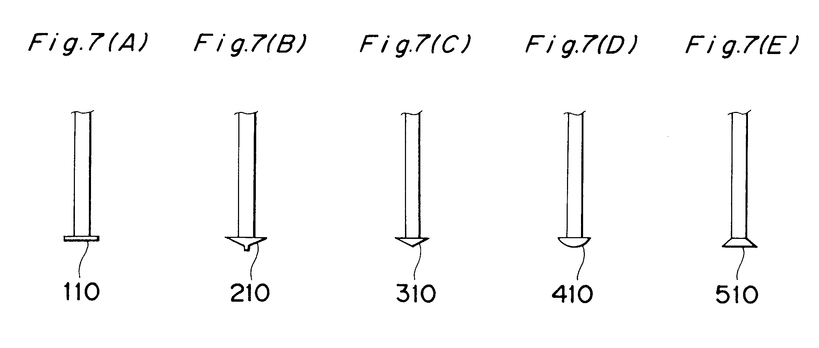

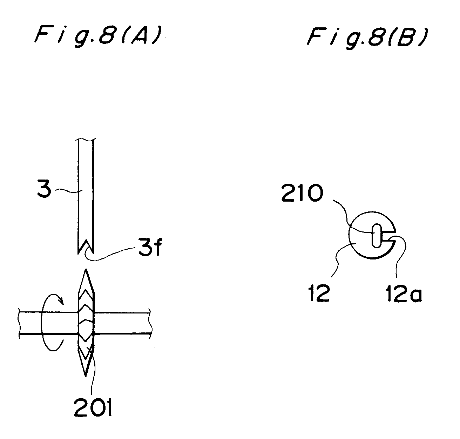

Figs. 7(A) through 7(E) illustrate the engaging part 110, 210, 310, 410 and 510 formed through rolling or press working. Fig. 8(A) explains how the engaging part is formed. Specifically, the front end of the rod part 3 is notched by a cutter 201. Then, the V-shaped front end 3f is hit by a hammer to be spread in the lateral direction, thereby to form the engaging part 210 as indicated in Fig. 8(B). In the drawing, 12 represents a flange and 12a is a notch.

### [Fifth embodiment]

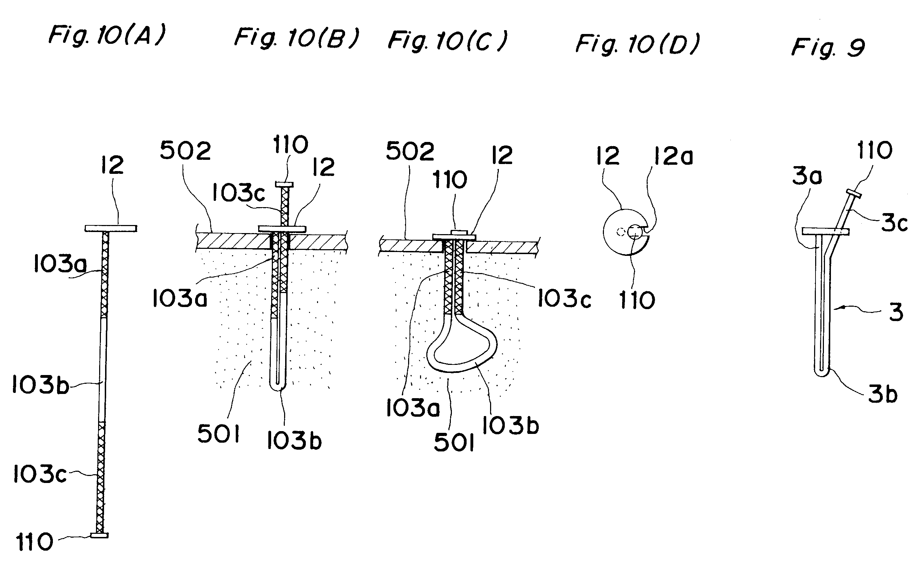

Fig. 9 illustrates an inconvenience to be brought about in the nail of the fourth embodiment. When the engaging part 110 is hit by the hammer to push the rod part 3, the other end 3c of the rod part 3 may sometimes be deflected as in Fig. 9. A nail of a fifth embodiment shown in Figs. 10(A) through 10(D) is provided so as to eliminate the aforementioned inconvenience.

In Fig. 10(A), one end 103a and the other end 103c of a rod part 103 of the nail are rigid parts processed through rolling and work hardening, while a central part 103b is flexible without being processed through work hardening. This is a difference from the nail of the fourth embodiment.

According to the fifth embodiment, even when the other end 103c of the rod part 103 of the nail is driven into an ALC panel 501 so as to fix a roofing material 502 to the ALC panel 501 as shown in Fig. 10(B), the one end 103a and the other end 103c of the rod part are kept straight, not deformed, as indicated in Fig. 10(C), because both ends are subjected to work hardening. The central part 103b without undergoing work hardening expands into O or L shape, etc. in the lateral direction, similar to the foregoing embodiments. Fig. 10(D) is a plan view of the nail.

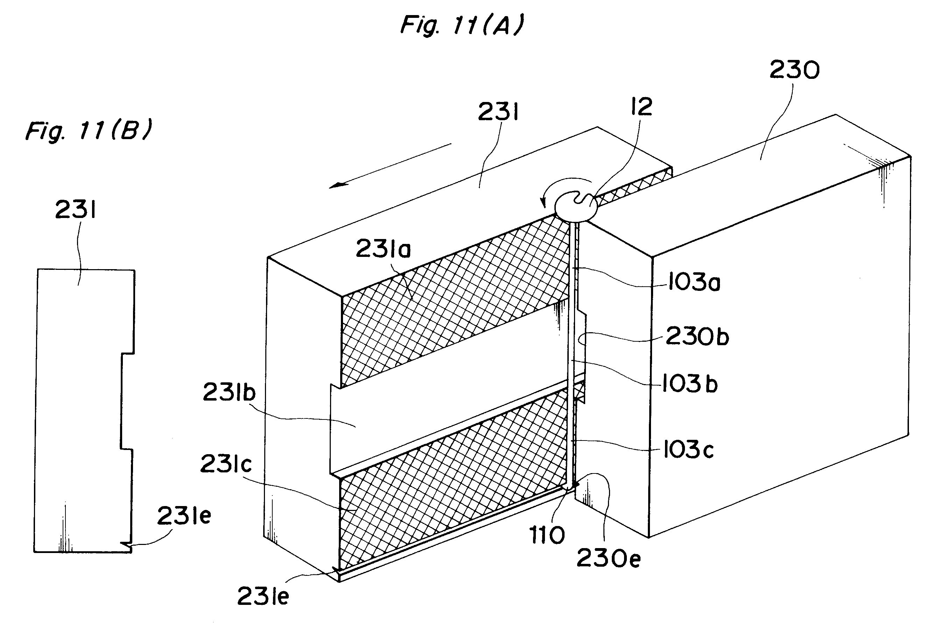

Fig. 11(A) shows the manufacturing method of the nail, in which 230 is a fixed die, and 231 is a moving die, a side view of which is shown in Fig. 11(B). Knurls such as diagonal lines and longitudinal lines are formed in the dies 230, 231 for work hardening of the one end 103a and the other end 103c of the rod part 103 (only the knurls of the moving die 231 are shown in Fig. 11(A)). Moreover, the fixed die 230 and the moving die 231 are respectively provided with grooves 230e and 231e to define an engaging part. A central part 230b, 231b of each die is recessed so that the central part of the rod part is not processed through work hardening.

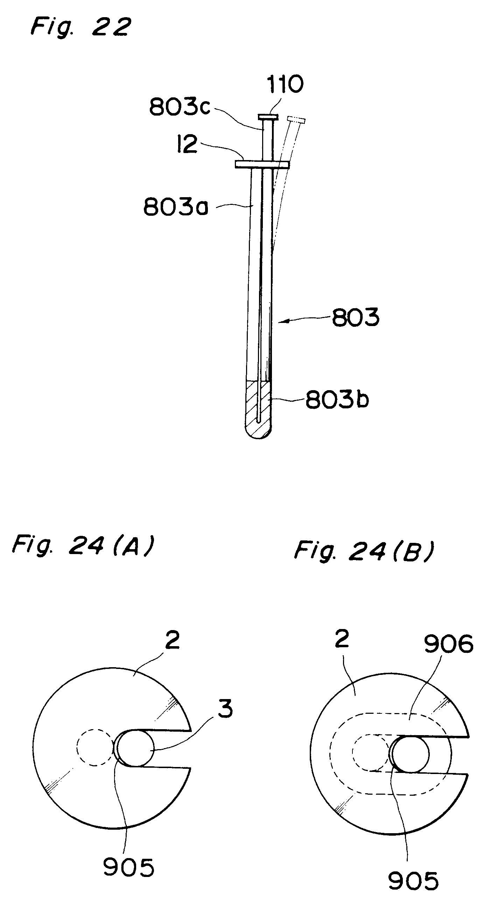

In the case where the nail is long, even when the one and the other ends of the rod part are reinforced through rolling, the strength is not sufficient and the other end of the rod part may be deflected as shown by a chain double-dashed line in Fig. 22. To solve this, the whole of a rod part 803 of the nail is quenched and thereafter, only the central part, namely, a front end 803b of the nail is tempered. Since the one end 803a and the other end 803c of the rod part 803 are left as they are hardened because of the quenching while the central part 803b are tempered, the nail is possible to bend. Accordingly, the other end 803c of the rod part 803 of even a long nail is never deflected, not alike as shown by the chain double-dashed line.

### [Sixth embodiment]

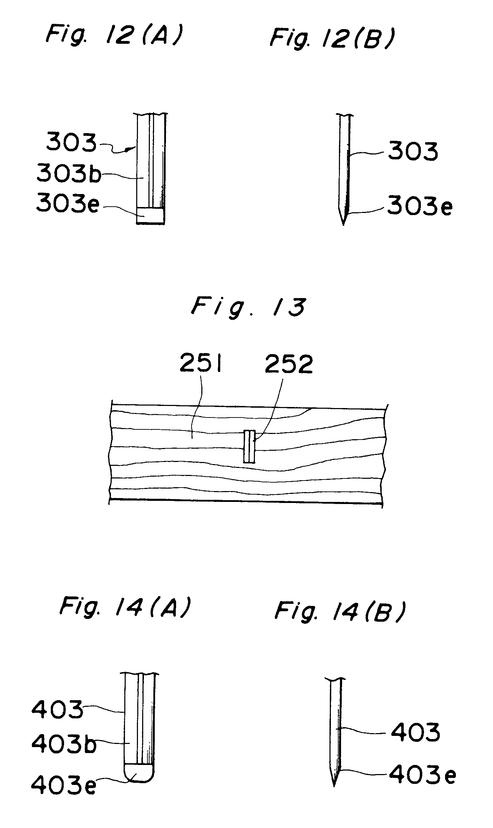

Figs. 12(A) and 12(B) are a front view and a side view of the front end part of a nail according to a sixth embodiment of the present invention. Although the head of the nail is not indicated in Figs. 12(A) and 12(B), it has the same structure as that of the fourth and fifth embodiments. The front end of the nail where a central part 303b of a rod part 303 is bent to U shape is rendered an edge 303e in the shape of an edge of a chisel, unlike the spearhead-like front end of the nail in the third embodiment of Fig. 5. The spearhead-like end part as in the third embodiment would break a wooden material. For example, when a woodgrain panel 251 as shown in Fig. 13 is to be fixed to an ALC plate, the edge 303e is set in a direction orthogonal to the running direction of fibers of the woodgrain panel 251. The nail is inserted as the edge 303e cuts the fibers of the panel 251, and therefore, the nail can be used without breaking the panel 251. 252 in Fig. 13 indicates a bore formed by the edge 303e.

### [Seventh embodiment]

Figs. 14(A) and 14(B) are a front view and a side view of the front end part of a nail according to a seventh embodiment of the present invention. An edge 403e of a chisel is formed at a U-bent central part 403b of a rod part 403 of the nail. Moreover, the edge 403e is rounded off at both sides thereof. The seventh embodiment is different from the sixth embodiment solely in that the edge 403e is rounded as described hereinabove. Since the nail of the seventh embodiment has the edge 403e rounded at both sides, it can be more smoothly pressed into a wooden material or the like than the nail of the sixth embodiment.

### [Eighth embodiment]

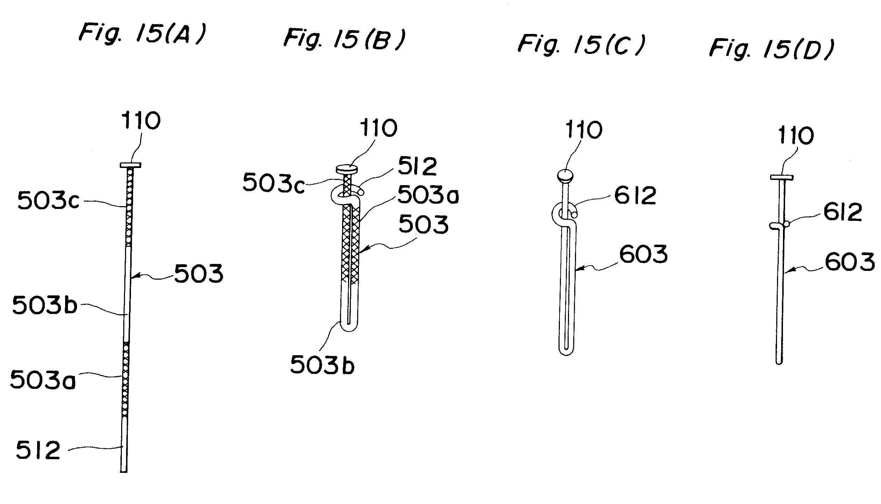

Fig. 15(B) is a perspective view of a nail according to an eighth embodiment of the present invention. The nail in the eighth embodiment has an annular part 512 in place of the flange 12 of the fifth embodiment. The annular part 512 is obtained by curving part of a rod part 503. When the other end 503c of the rod part 503 is inserted into the annular part 512, the engaging part 110 secured to the other end 503c is caught and engaged by the annular part 512. The one end 503a and the other end 503c of the rod part 503 are work-hardened by rolling, while the central part 503b is not processed through work hardening and therefore flexible, similar to the fifth embodiment.

Since the annular part 512 working as a flange is obtained by curving part of the rod part 503, the nail of the eighth embodiment is easy and inexpensive to form.

Fig. 15(A) indicates the nail of the eighth embodiment in the state before the rod part 503 is bent in U shape, and the annular part 512 is not formed yet. The flexible parts 503b and 512 are easy to bend, and the rigid parts 503a and 503c processed through work hardening are difficult to bend.

In Figs. 15(C) and 15(D) is shown a nail of approximately the same structure as in Figs. 15(A) and 15(B), except that the one and the other ends of a rod part 603 are not subjected to work hardening. 612 is an annular part and 110 indicates an engaging part.

### [Ninth embodiment]

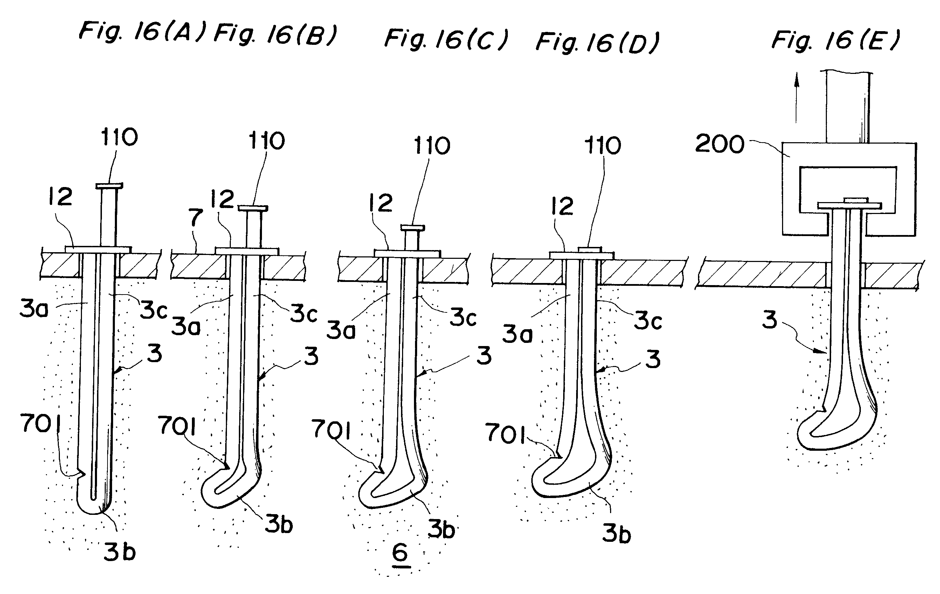

Figs. 16(A)-16(E) are views of a nail of a ninth embodiment of the present invention. The nail in Figs. 16 (A)-(E) is different from the nail of the fourth embodiment illustrated at the left side in Figs. 6(A)-6(C), more specifically, a V-shaped notch 701 is formed in the outer side of the U-bent central part 3b continued to the flange 12. The same parts as in the fourth embodiment are designated by the same reference numerals, the description of which will be abbreviated for brevity.

When the engaging part 110 of the nail is hit more from the state of Fig. 16(A) by a hammer (not shown), the other end 3c of the rod part is forwarded into the ALC panel 6 as shown in Figs. 16(B), 16(C) and 16(D). At this time, the rod part is easily bent at the notch 701, with great stress impressed thereto. Consequently, the central part 3b at the side of the one end 3a is bent into L shape acutely from the notch 701 as in Figs. 16(B) and 16(C). The central part 3b at the side of the other end 3c is bent afterward as shown in Fig. 16(D). The shape of the nail after the deformation of the central part 3b is always the same since the notch 701 works as an origin for deformation. When the retaining force, namely, pull-out resistance of the nail is tested by a pull-out testing apparatus 200 as indicated in Fig. 16(E), the same resistance is achieved for the same kind of nails even when the striking force and the striking angle of the hammer are changed. That is, the nail of the embodiment can obtain the uniform retaining force.

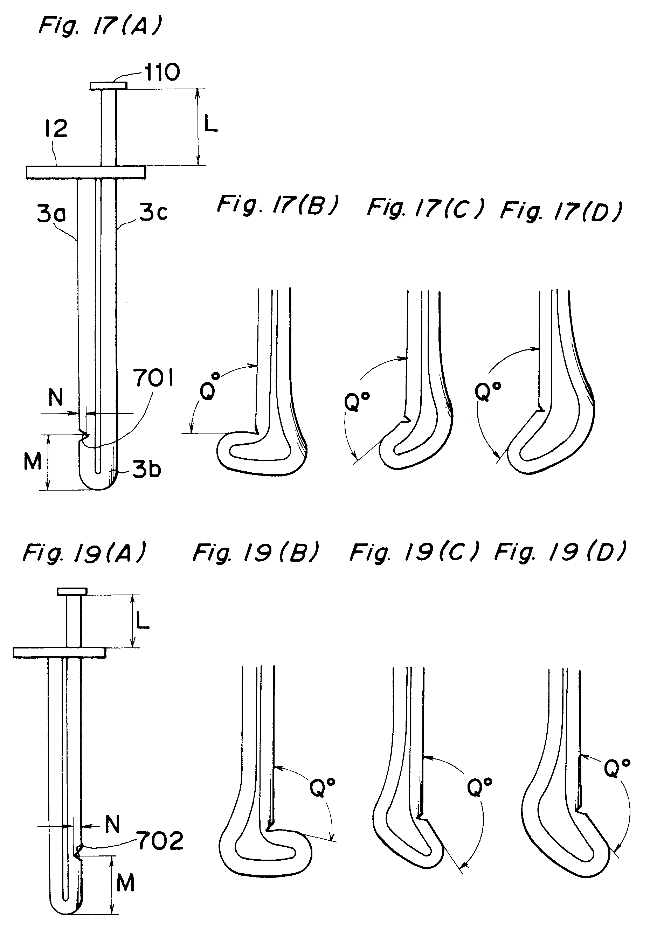

The shape of the front end of the nail of Figs. 16(A)-16(E) when it is hit, i.e., the deformed shape of the central part differs depending on the depth N of the notch 701, the distance M from the front end of the central part 3b to the notch 701, the depth N of the notch 701, and the projecting length L of the other end 3c of the rod part from the flange 12, which is clearly indicated in Figs. 17(B)-(D). Fig. 17(B) represents the shape when all of N, M and L are large, whereas N and M are large and L is small in Fig. 17(C), while N is short, and M and L are large in Fig. 17(D).

The bending angle Q at the notch 701 is closest to 90° in Fig. 17(B) and accordingly, the pull-out resistance is maximum in the case of Fig. 17(B). More specifically, the pull-out resistance is largest when the depth N of the notch 701 is large, the distance M between the notch and the front end of the central part is also large, and the projecting length of the other end 3c from the flange 12 is long. The notch 701 may not particularly be V in cross section, but may be arched or rectangular.

### [Tenth embodiment]

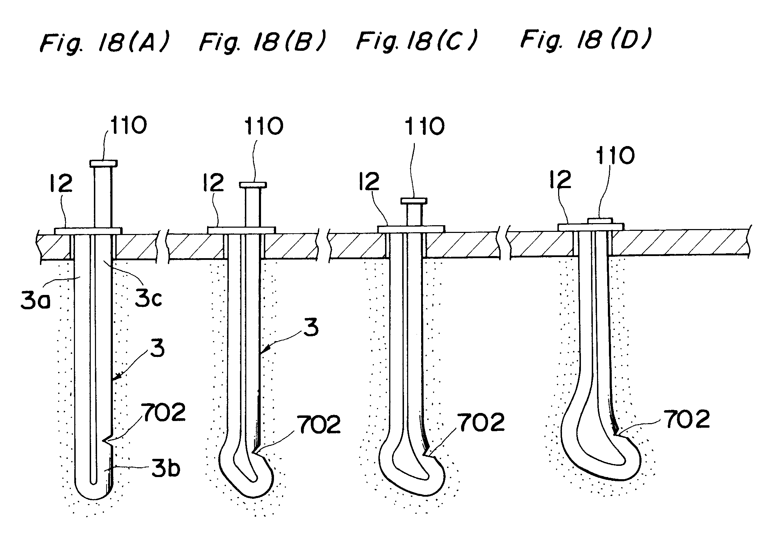

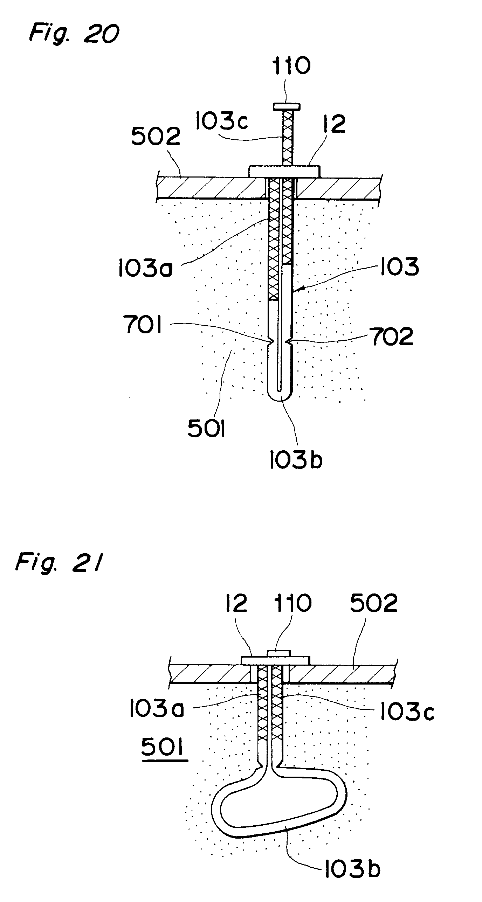

Referring to Figs. 18(A)-(D) showing a nail of a 10th embodiment of the present invention, the position of a notch 702 is made different from that in the ninth embodiment shown in Figs. 16(A)-16(E). The other constitution is the same. The notch 702 is formed at the outer side of the central part 3b of the rod part 3 continued to the engaging part 110. The nail is deformed in the same shape as shown in Figs. 18(B), 18(C) and 18(D) regardless of the force and direction when the engaging part 110 of the nail is struck by the hammer, thereby realizing the same and uniform retaining force. However, the shape of the front end of the driven nail, i.e., the deformed shape of the central part is different depending on the depth N of the notch 702, the distance M from the front end of the central part 3b to the notch N and the projecting length L of the other end 3c of the rod part 3 from the flange 12, as is apparent from Figs. 19(B) through 19(D). In Fig. 19(B), N, M and L are large. In Fig. 19(C), N and M are large, but L is small. Meanwhile, N is small, and M and L are large in Fig. 19(D).

The bending angle Q at the notch 702 is closest to 90° in the case of Fig. 19(B), therefore realizing the largest pulling resistance. In other words, the pulling resistance is maximum when the depth N of the notch 702 is large, the distance M between the notch 702 and the front end of the central part is long and, the projecting length of the other end 3c of the rod part from the flange 12 is large.

### [11th embodiment]

Figs. 20 and 21 show a nail of an 11th embodiment according to the present invention. In the 11th embodiment different from the fifth embodiment of Figs. 10(A)-10(D), two notches 701 and 702 are formed at both sides of the central part 103b of the rod part 103, whereby the central part 103b spreads in O shape from the notches 701 and 702. The deformed shape of the central part 103b is always constant for the same kind of nails irrespective of the angle and force of the hammer to the engaging part 110. Therefore, the nail of the 11th embodiment can obtain uniform retaining force at all times.

The notches are not restricted to two, but three or more notches may be provided. Further, only a notch may be formed at one side of the central part 103b.

### [12th embodiment]

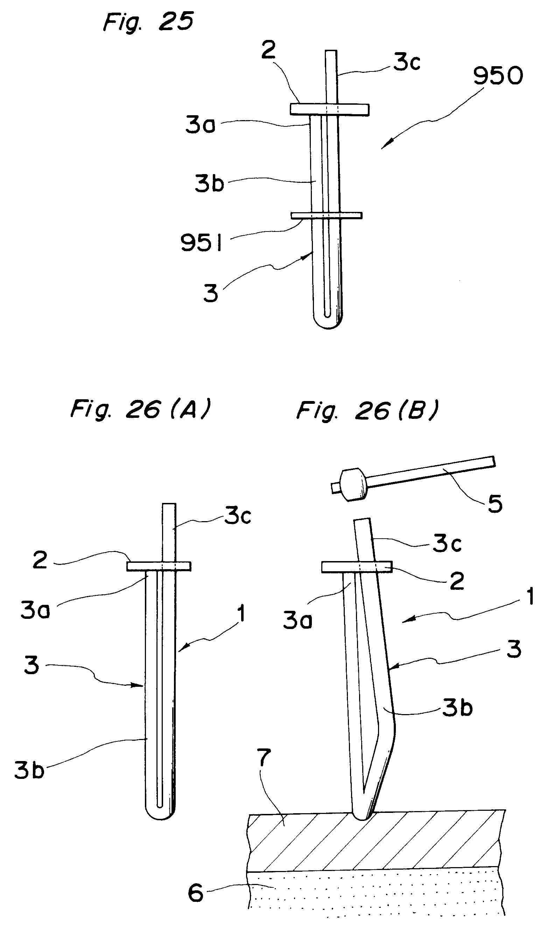

If the nail of the first embodiment is used in rain or the like circumstances, the rain invades the bore around the rod part 3, particularly, the bore expanded thereinside, through a gap 905 as indicated in Fig. 24(A), resulting in the corrosion of the nail. Even if an O ring 906 encircling the U-shaped central part of the rod part 3 is provided to butt against the flange 2 as in Fig. 24(B), the water enters the bore from the gap 905 at the inner side of the O ring 906, and the rod part cannot help but corroding. A 12th embodiment is to solve the problem.

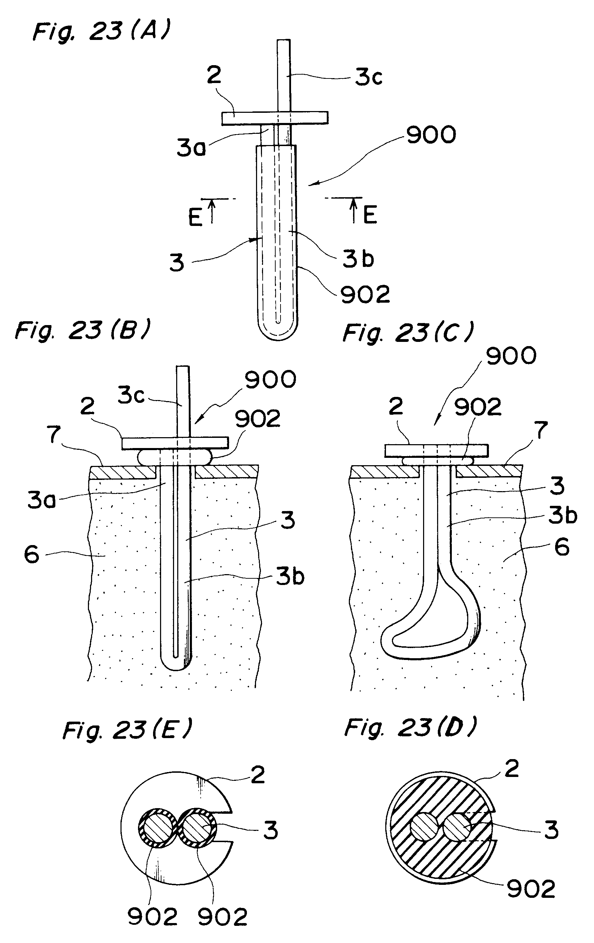

A nail 900 of the 12th embodiment of the present invention is, as shown in Fig. 23(A), provided with the flange 2, the rod part 3 and a film 902. Since the flange 2 and the rod part 3 are in the same structure as those of the first embodiment, the same reference numerals are assigned and the description thereof will be abbreviated for brevity.

As in Fig. 23(A), the film 902 of flexible and elastic rubber is coated in the area around the central part 3b of the rod part, more specifically, a leg of the rod part. The film 902 concentrically surrounds the rod part 3 as viewed in Fig. 23(E). Moreover, the film 902 is movable to the rod part 3 while it surrounds the rod part 3.

When the nail 900 is driven into the ALC panel 6 with holding the roofing material 7 therebetween as shown in Fig. 23(B), since the film 902 is movable to the rod part 3, the film 902 is rolled up concurrently when the nail is struck and brought between the roofing material 7 and the flange 2, surrounding the rod part 3. As the other end 3c of the rod part 3 is further proceeded forward, as indicated in Fig. 23(C), the central part 3b of the rod part 3 expands in the lateral direction and the flange 2 is pressed against the roofing material 7, and the film 902 completely surrounds the periphery of the rod part 3 as is clearly shown in Figs. 23(C) and 23(D). The film 902 works as a packing because it is crushed to expand between the flange 2 and the roofing material 7. Accordingly, since the upper end of the bore opened when the nail 900 is struck is tightly sealed by the rolled film 902, it can be prevented that the rain water or the like invades the bore expanded thereinside. The deterioration of both the nail 900 and the ALC panel 6 can be hence prevented.

Although the film 902 is coated all over the area of the central part 3b a predetermined distance below the flange 2, it is possible to provide the film only in a predetermined area in the vicinity of the flange except for the front end of the bent rod part.

A film to prevent the invasion of water may be provided also for the nails of the second through 11th embodiments, similar to the film 902 of the 12th embodiment.

### [13th embodiment]

When the nail 1 of Fig. 26(A) which is the nail of the first embodiment is driven into a hard material 7 as shown in Fig. 26(B), one side of the central part 3b buckles apart from the other side. Therefore, a 13th embodiment is devised to solve the buckling.

As illustrated in Fig. 25, a nail 950 according to the 13th embodiment has the flange 2, the rod part 3 and a washer 951. The flange 2 and the rod part 3 are in the same structure as those in the first embodiment and designated by the same reference numerals, the description of which will be abbreviated.

The washer 951 is a hollow disc fitted with pressure into the central part 3b of the rod part 3. The washer 951 is able to move towards the flange 2 upon receipt of a predetermined force.

The washer 951 restricts the buckling of the central part 3b when the nail 950 is driven into a hard material (not shown). When the washer hits the end face of the hard material, the washer 951 is pressed by the end face of the material and moved to the flange 2. In the state where the nail 950 is completely set in, the washer 951 is held in tight contact with the flange 2 and the end face of the hard material.

According to the 13th embodiment, the washer 951 is fixed to the central part of the rod part of the nail of the first embodiment. The washer may be provided for each nail of the second through 12th embodiments to prevent the buckling. If the washer is provided for the nail of the 12th embodiment, the film to prevent the invasion of water is preferably coated between the washer and the flange.

As described above, the nail of the present invention consists of a flange and a rod part. The one end of the rod part is fixed to the flange, and the other end penetrates the flange in a movable manner and projects a predetermined distance in the opposite direction to the central part of the U-bent rod part continued to the one end. Therefore, when the nail is completely inserted, the front end of the nail is deformed to expand in the lateral direction or turned in L shape, thereby securing large pulling resistances to plasterboard, etc. of weak retaining force.

If the outer side of the U-bent part of the rod part is sharpened, the nail can be smoothly driven into wood or ALC panels, etc.

Further, if an engaging part engageable to the flange is provided at the other end of the rod part, the central part of the rod part bent in O or L shape is hard to deform because of the engagement of the flange and the engaging part even when the nail is inclined to come off from the plasterboard, ALC panel or the like. Accordingly, the nail achieves large retaining force.

When the one end and the other end of the rod part are rigid and the U-bent central part is flexible, the nail can be inserted into the plasterboard or ALC panel reliably without deflecting the one end and the other end of the rod part. Particularly, the other end of the rod part projecting from the flange is never deflected at the hitting time. Moreover, since the central part of the rod part is formed of flexible material, the nail expands easily in the lateral direction, therefore achieving large retaining force.

If the one and the other rigid ends of the rod part are obtained by work hardening, it is easy and inexpensive to form the one and the other ends of the rod part.

On the other hand, if quenching is used to form the one and the other rigid ends, the nail becomes sufficiently strong and the other end of even a long nail comes not to be deflected.

If the outer side of the U-bent part of the rod part is formed like an edge of a chisel, when the nail is hit so that the edge is orthogonal to the direction of fibers of a woodgrain panel, the nail is inserted while cutting the fibers of the woodgrain panel, but without breaking the woodgrain panel.

In the case where the edge is rounded at both sides thereof, the nail can be smoothly inserted without breaking fibrous wood, etc.

Moreover, if an annular part, instead of the flange, is formed at one end of the rod part, part of the rod part works as a flange and the nail can be manufactured at low cost with ease.

When a notch is provided at the outer side of the central part of the rod part, the nail is deformed from the notch into the shape constant at all times, thus realizing large constant pulling resistance.

If a flexible and elastic film is coated at least partly around the central part of the rod part in a manner to be movable to the rod part, the film is rolled up when the nail is driven into the ALC panel or the like and, crushed between the flange and the ALC panel, thereby serving as a packing. Accordingly, the upper end of the bore formed by the nail is sealed and the water or the like is prevented from entering the bore. As a result, the deterioration of the nail and ALC panel, etc. can be avoided.

If a washer is fitted at the central part of the rod part in a movable fashion to the flange, both sides of the central part are bundled by the washer, and therefore buckling is prevented.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A nail, comprising:
a flange (2, 12); and
a rod part (3, 103, 303, 403, 803) having one end (3a, 103a, 803a) fixed to said flange (2, 12) and continuing to a central U-bent part (3b, 103b, 803b) and the other end (3c, 103c, 803c) continuing from said central U-bent part (3b, 803b) and penetrating said flange (2, 12) in a movable manner to project a predetermined length in direction opposite to said central U-bent part (3b, 803b).

2. The nail according to claim 1, wherein a front end (3f) of said U-bent part (3b) of the rod part (3) is sharpened.

3. The nail according to claim 1, wherein an engaging part (110) is provided at said the other end (3c) of the rod part (3) to be engaged with said flange (12).

4. The nail according to claim 1 or 3, wherein said the one and the other ends (103a, 103c) of said rod part (103) are rigid, while said central part (103c) is flexible.

5. The nail according to claim 4, wherein said the one and the other ends (103a, 103c) are processed through work hardening.

6. The nail according to claim 4, wherein said one and the other ends are hardened by quenching, while said central part is softened by tempering.

7. The nail according to any one of claims 1, 3, 4, 5 and 6, wherein the front end (303e, 403e) of said U-bent part (303b, 403b) of rod part (303, 403) comprises an edge (303e, 403e) in the shape of an edge of a chisel.

8. The nail according to claim 7, wherein said edge (403e) is rounded at both sides thereof.

9. A nail, comprising:
a rod part (503, 603) having a central part (503b) bent in U shape, with an annular part (512, 612) formed at one end thereof through which the other end (503c) thereof is inserted; and
an engaging part (110) fixed to said the other end (503c) of the rod part (503, 603) and engageable to said annular part (512, 612).

10. The nail according to any one of claims 1 through 9, wherein a notch (701, 702) is provided at the outer side of said U-bent central part (3b) and a predetermined distance apart from said the front end of said nail.

11. The nail according to claim 10, wherein said notch (701) is provided at the outer side of a part of said central part (3b) continuing to said one end (3a) of said rod part (3).

12. The nail according to claim 10, wherein said notch (702) is provided at the outer side of a part of said central part (3b) continuing to said the other end (3c) of said rod part (3).

13. The nail according to claim 10, wherein said notches (701, 702) are formed at the outer sides of respective parts of said central part (3b) continuing to said one and the other ends (3a, 3b) of said rod part (3).

14. The nail according to claim 10, wherein said notches (701, 702) are provided by a plurality of numbers.

15. The nail according to any one of claims 1 through 8 and 10 through 14, wherein a film (902) of flexible and elastic material is coated at least partly around said rod part (3) of the U-bent central part (3b) side with respect to said flange (2), in a movable fashion relative to said rod part (3).

16. The nail according to claim 9, wherein a film of flexible and elastic material is coated at least partly around said rod part of the U-bent central part side with respect to said annular part, in a movable fashion relative to said rod part.

17. The nail according to any one of claims 1 through 16, wherein a washer (951) is fitted at both parallel portions of said central part (3b) of the rod part (3) in a movable fashion towards said flange (2).
